# FASCICULE DE BREVET EUROPEEN

(11) **EP 1 965 355 B1**
(45) Date de publication et mention de la délivrance du brevet: **12.05.2010**
(21) Numéro de dépôt: 08002711.3
(22) Date de dépôt: 14.02.2008
(51) Int. Cl.: G07C 9/00, B60R 25/00

(54) **Procédé d'inhibition provisoire, lors de sa détection dans un véhicule verrouillé, d'un boîtier portable de commande à distance, dit identifiant, d'un dispositif d'accès mains libres**
Verfahren zur provisorischen Sperrung eines tragbaren Fernbedienungsgeräts eines schlüssellosen Zugangssystems, eines sogenannten Identifikators, bei der Erkennung in einem verriegelten Fahrzeug
Method of provisionally inhibiting, when detected in a locked vehicle, a portable remote control box, called identifier, of a hands-free access device

(30) Priorité: 01.03.2007 FR 0701486
(43) Date de publication de la demande: 03.09.2008
(73) Titulaire: Continental Automotive France, 31036 Toulouse Cedex 1 (FR)
(72) Inventeur: Brillon, Alain, 31270 Villeneuve-Tolosane (FR); Escarpit, Valérie, 31470 Fontenilles (FR)

(56) Documents cités:
- EP-A1- 1 041 226
- EP-A1- 1 388 469
- EP-A2- 1 408 457
- DE-A1- 19 960 260
- FR-A1- 2 828 706

## Description

L'invention concerne un procédé d'inhibition provisoire, lors de sa détection dans un véhicule verrouillé, d'un boîtier portable de commande à distance, dit identifiant, d'un dispositif d'accès mains.

Les dispositifs d'accès mains libres à un véhicule comportent classiquement un boîtier portable de commande à distance, appelé identifiant, une unité centrale embarquée dans le véhicule, et des moyens de transmission, d'une part, disposés dans le véhicule et d'autre part, intégrés dans l'identifiant, et adaptés pour permettre d'instaurer un dialogue entre l'unité centrale et le dit identifiant en vue de la mise en oeuvre de procédures d'autorisation d'accès au véhicule.

Les dispositifs d'accès mains libres classiques actuels comprennent, en outre, un capteur de proximité adapté pour être implanté dans une poignée de portière de façon à détecter la main d'une personne actionnant cette poignée, et pour commander, lors de son activation, le déclenchement d'une procédure d'identification de l'identifiant porté par cette personne.

Un des inconvénients de ces dispositifs d'accès mains libres résulte de l'obligation d'obtenir un déverrouillage de la portière avant l'actionnement total de la poignée, faute de quoi le mécanisme de verrouillage se bloque, interdisant l'ouverture de la portière.

Il découle, en effet, de cette obligation que le temps imparti pour effectuer les opérations d'identification et de déverrouillage, s'avère fréquemment insuffisant, de sorte que la portière ne se déverrouille pas lors de son premier actionnement (incident connu sous l'appellation « effet mur»).

En vue notamment de pallier cet inconvénient qui s'avère perturbant pour les propriétaires des véhicules, une évolution a consisté à réaliser des dispositifs d'accès mains libres conçus pour permettre une identification des identifiants dés l'introduction de ces derniers dans une zone, dite zone de couverture, d'étendue prédéterminée autour des véhicules.

A cet effet, ces dispositifs d'accès mains libres sont programmés de façon à mettre en oeuvre une procédure d'identification consistant à commander l'émission périodique par l'unité centrale embarquée dans le véhicule d'une trame de données incorporant un préambule consistant en un code de réveil prédéfini identifiable par l'identifiant, ce dernier étant programmé, après identification de ce code de réveil, pour basculer d'un état de veille vers un état actif permettant d'instaurer un dialogue avec l'unité centrale.

De tels dispositifs d'accès ont, en outre, pour intérêt de permettre d'accompagner l'opération de déverrouillage d'une commande d'allumage de certaines sources d'éclairage du véhicule, telles que par exemple le plafonnier, les éclairages des seuils des portes..., fonction connue classiquement sous la dénomination « welcome lighting » (éclairage de bienvenue).

A l'usage, cette procédure d'identification a toutefois révélé un inconvénient constaté lors de l'oubli d'un identifiant dans un véhicule. En effet, dans cette hypothèse et après verrouillage du véhicule, l'identifiant ainsi oublié est ensuite périodiquement réveillé par l'unité centrale, avec pour conséquence une décharge rapide de la pile incorporée dans le dit identifiant.

A l'heure actuelle, la parade proposée pour pallier cet inconvénient consiste en une procédure d'inhibition provisoire selon laquelle, lors de la détection d'un identifiant dans un véhicule, après verrouillage de ce véhicule, on supprime la procédure d'identification « à distance » des identifiants, et par conséquent on conditionne le déclenchement de cette procédure d'identification à l'activation d'un capteur de proximité intégré dans une portière.

Une telle solution résout le problème de consommation de courant des identifiants oubliés dans les véhicules, mais elle s'avère par contre perturbante pour les propriétaires des véhicules du fait qu'elle entraîne la suppression de la fonction « welcome lighting », et qu'elle peut également donner lieu à l'apparition « d'effets murs ».

Une autre solution décrite dans les documents EP 1 041 226 et FR 2 828 706 consiste non pas à inhiber totalement la procédure d'identification mais à inhiber cette procédure pour le badge oublié dans le véhicule uniquement. Cette inhibition se fait par envoi d'un ordre d'inhibition de la fonction vers le badge oublié. Cependant ce badge continu à traiter tout message reçu pour ensuite ne pas l'exécuter si c'est une demande d'accès au véhicule. En effet le badge oublié dans le véhicule doit être en mesure de recevoir tout message de réactivation de sa fonction d'accès au véhicule. De ce fait ce badge oublié continu à dépenser de l'énergie avec pour conséquence une décharge rapide de la pile incorporée dans le dit identifiant.

La présente invention vise à pallier cet inconvénient et a pour principal objectif de fournir un procédé d'inhibition provisoire totalement transparent pour l'utilisateur du véhicule, et résolvant le problème de consommation de courant des identifiants oubliés dans les véhicules.

A cet effet, l'invention vise un procédé d'inhibition provisoire, lors de sa détection dans un véhicule verrouillé, d'un boîtier portable de commande à distance, dit identifiant, d'un dispositif d'accès mains libres comportant, outre le dit identifiant, une unité centrale embarquée dans le véhicule et des moyens de transmission, d'une part, disposés

dans le véhicule et, d'autre part, intégrés dans l'identifiant, et adaptés pour permettre d'instaurer un dialogue entre l'unité centrale et l'identifiant en vue de la mise en oeuvre de procédures d'autorisation d'accès au véhicule comportant une procédure initiale d'identification consistant à commander l'émission périodique par l'unité centrale d'une trame de données incorporant un préambule consistant en un code de réveil prédéfini identifiable par l'identifiant, ce dernier étant programmé, après identification de ce code de réveil, pour basculer d'un état de veille vers un état actif permettant d'instaurer un dialogue avec l'unité centrale.

Selon l'invention, le procédé d'inhibition consiste :
- à définir un premier code de réveil WUP1 au moins destiné à la procédure d'inhibition provisoire des identifiants,
- à définir un deuxième code de réveil WUP2 spécifiquement destiné à la procédure d'identification des identifiants,
- et à instaurer des procédures d'inhibition provisoire consistant, lors de la détection d'un identifiant dans un véhicule verrouillé, à commander la transmission vers le dit identifiant, par l'unité centrale, d'une trame de données spécifique incorporant, en préambule, le premier code de réveil WUP1, et adaptée pour commander une désactivation de la reconnaissance, par cet identifiant, du deuxième code de réveil WUP2.

Selon ce procédé, la trame de données émise périodiquement par l'unité centrale d'un véhicule comporte donc un code de réveil WUP2 spécifique à la procédure d'identification, et la procédure d'inhibition provisoire consiste à transmettre une trame de données incorporant un code de réveil WUP1 différent et adaptée pour désactiver la reconnaissance du code de réveil WUP2 spécifique à la procédure d'identification, pour l'identifiant oublié dans le véhicule.

Ce principe conduit donc à inhiber provisoirement le fonctionnement des identifiants détectés dans les véhicules, sans toutefois affecter les procédures d'identification des autres identifiants, de sorte que la procédure d'inhibition est totalement transparente pour l'utilisateur.

Selon un mode de mise en oeuvre avantageux de l'invention, en vue de mettre fin à la procédure d'inhibition provisoire, après déverrouillage du véhicule, on commande la transmission vers chaque identifiant préalablement détecté dans le dit véhicule, d'une trame de données spécifique incorporant, en préambule, le premier code de réveil WUP1, et adaptée pour commander une réactivation de la reconnaissance, par cet identifiant du deuxième code de réveil WUP2.

De façon avantageuse selon l'invention, on définit, en outre, avantageusement deux codes de réveil différents :
- un premier code de réveil WUP1 de type classique destiné à être transmis en préambule de trames de données relatives aux procédures d'inhibition provisoire et aux autres différentes fonctions des identifiants,
- et un deuxième code de réveil WUP2 spécifique à la procédure d'identification des identifiants, et incorporant un code d'identification du véhicule.

Selon ce principe, en premier lieu, les trames de données transmises lors de la procédure d'identification intègrent le code d'identification du véhicule, de sorte que seuls les identifiants de ce véhicule sont « réveillés » après analyse du dit code de réveil et émettent une réponse en retour.

Ainsi les consommations de courant se trouvent optimisées tant en ce qui concerne les véhicules que les boîtiers de commande.

De plus, ce mode de mise en oeuvre consiste à émettre des codes de réveil conçus de façon à privilégier :
- le temps de réaction pour toutes les fonctions des identifiants initiées ponctuellement et donc non susceptibles d'entraîner des consommations de courant significatives du fait de ce caractère ponctuel,
- la consommation de courant lors des procédures d'identification qui présentent un caractère périodique.

D'autres caractéristiques buts et avantages de l'invention ressortiront de la description détaillée qui suit en référence au dessin annexé qui en représente à titre d'exemple non limitatif un mode de réalisation préférentiel. Sur ce dessin, la figure unique 1 est une vue de dessus schématique d'un véhicule équipé d'un système d'accès mains libres selon l'invention.

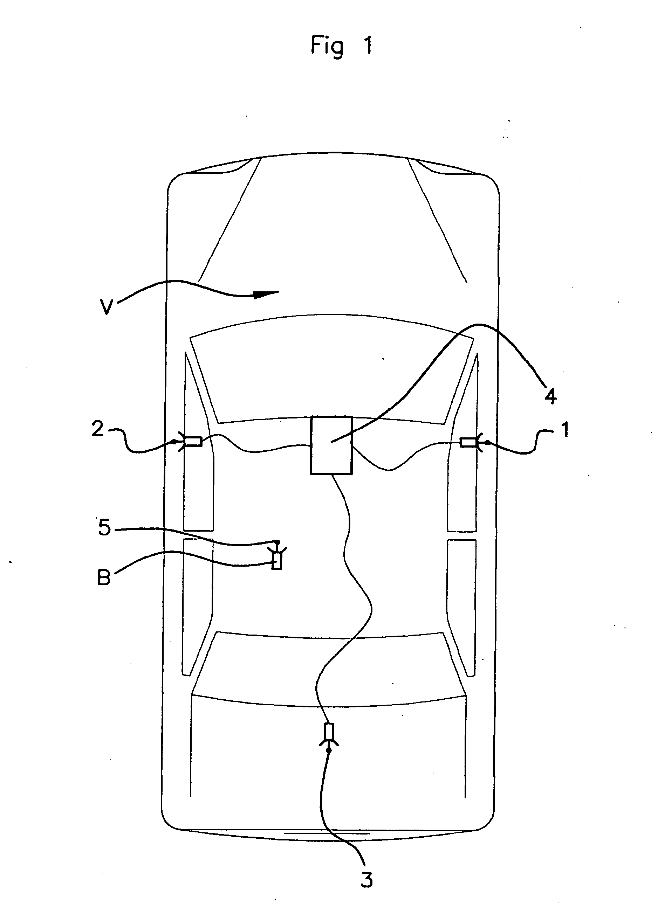

L'invention représentée à la figure 1 vise un dispositif usuellement connu sous l'appellation « système d'accès mains libres » adapté pour permettre d'accéder à un véhicule V et éventuellement de démarrer ce dernier grâce à l'identification d'un boîtier portable de commande à distance B communément dénommé « badge électronique » ou identifiant.

De façon usuelle et tel que représenté à la figure 1, un tel système d'accès mains libres comprend, en premier lieu, des antennes telles que 1 à 3 disposées à l'intérieur (non représentées) et à l'extérieur du véhicule V, et connectées à une unité centrale 4 embarquée dans le dit véhicule et dotée d'un calculateur intégrant un émetteur basse fréquence « BF » et un récepteur radio fréquence « RF ».

Il est à noter, qu'à des fins de simplification, seulement trois antennes extérieures 1-3, en l'exemple positionnées sur les portières latérales et la portière d'accès au coffre du véhicule V, sont représentées à la figure 1. Toutefois, le dispositif d'accès mains libres selon l'invention comporte également, de façon classique, des antennes intérieures et une antenne de réception RF usuellement intégrée dans l'unité centrale 4.

L'identifiant B de ce système d'accès mains libres comprend, quant à lui, un calculateur intégrant un récepteur basse fréquence « BF » et un émetteur radio fréquence « RF » connectés à des antennes telles que 5.

De façon usuelle, de tels systèmes d'accès mains libres sont notamment conçus de façon à autoriser un déverrouillage automatique des portières d'un véhicule V suite à l'identification d'un identifiant B par l'unité centrale 4 de ce véhicule V dans une zone de couverture prédéfinie autour du véhicule V.

De plus, en vue d'autoriser ce déverrouillage automatique des portières du véhicule V :
- l'unité centrale 4 est programmée pour émettre périodiquement une trame de données consistant en un code de réveil prédéfini WUP1 identifiable par l'identifiant B,
- et cet identifiant B est programmé, après identification du code de réveil WUP2, pour basculer d'un état de veille vers un état actif dans lequel il instaure un dialogue avec l'unité centrale.

En outre, la trame de données émise périodiquement par l'unité centrale 4 définit avantageusement un code de réveil WUP2 de quatre octets spécifiquement destiné à la procédure d'identification des identifications B, et se décomposant en :
- un premier octet spécifique à la fonction « welcome lighting », identique pour tous les véhicules d'une même plateforme,
- et trois octets suivants spécifiques à chaque véhicule et représentatifs du code d'identification VIN du dit véhicule.

Par contre, la trame de données émise par l'unité centrale 4 pour toutes les autres fonctions des identifiants B, à savoir procédures d'inhibition selon l'invention décrites ci-dessous, ainsi que par exemple commande de verrouillage, commande de démarrage, fonction diagnostic..., sont de type classique et incorporent :
- un premier octet définissant un code de réveil classique WUP1 identique pour tous les véhicules d'une même plateforme,
- un deuxième octet FC définissant la fonction visée par la trame de données, c'est-à-dire la commande destinée à être réalisée après réveil de l'identifiant B,
- et x octets définissant les données utiles spécifiques à la fonction.

Sur la base des principes édictés ci-dessus, la procédure d'inhibition provisoire déclenchée, selon l'invention, lors de l'oubli et donc de la détection d'un identifiant B dans un véhicule V verrouillé, consiste à commander l'émission par l'unité centrale 4, à destination du dit identifiant, d'une trame de données incorporant :
- un premier octet définissant le code de réveil classique WUP1,
- et n octets de commande de la désactivation de la reconnaissance, par l'identifiant B, du code de réveil WUP2.

Ainsi, l'identifiant B n'est plus concerné par la procédure d'identification, et ce jusqu'au moment de la transmission par l'unité centrale 4, après déverrouillage du véhicule V, d'une trame de données incorporant le premier code de réveil WUP1, et adaptée pour commander une réactivation de la reconnaissance, par cet identifiant B, du deuxième code de réveil WUP2.

Un telle procédure d'inhibition conduit donc à inhiber provisoirement le fonctionnement des identifiants B détectés dans les véhicules V, sans toutefois affecter les procédures d'identification des autres identifiants B, notamment portés par les utilisateurs des véhicules V, de sorte que cette procédure d'inhibition est totalement transparente pour l'utilisateur et ne supprime aucune fonction "mains libres" pour les badges se trouvant hors du véhicule.

## Revendications

1. Procédé d'inhibition provisoire, lors de sa détection dans un véhicule (V) verrouillé, d'un boîtier portable de commande à distance (B), dit identifiant, d'un dispositif d'accès mains libres comportant, outre le dit identifiant, une unité centrale (4) embarquée dans le véhicule (V) et des moyens de transmission (1-3, 5), d'une part, disposés dans le véhicule (V) et, d'autre part, intégrés dans l'identifiant (B), et adaptés pour permettre d'instaurer un dialogue entre l'unité centrale (4) et l'identifiant (B) en vue de la mise en oeuvre de procédures d'autorisation d'accès au véhicule (V) comportant une procédure initiale d'identification consistant à commander l'émission périodique par l'unité centrale (4) d'une trame de données incorporant un préambule consistant en un code de réveil prédéfini identifiable par l'identifiant (B), ce dernier étant programmé, après identification de ce code de réveil, pour basculer d'un état de veille vers un état actif permettant d'instaurer un dialogue avec l'unité centrale (4), le dit procédé d'inhibition étant **caractérisé en ce qu'**il consiste :
• à définir un premier code de réveil WUP1 au moins destiné à la procédure d'inhibition provisoire des identifiants (B),
• à définir un deuxième code de réveil WUP2 spécifiquement destiné à la procédure d'identification des identifiants (B),
• et à instaurer des procédures d'inhibition provisoire consistant, lors de la détection d'un identifiant (B) dans un véhicule (V) verrouillé, à commander la transmission vers le dit identifiant, par l'unité centrale (4), d'une trame de données spécifique incorporant, en préambule, le premier code de réveil WUP1, et adaptée pour commander une désactivation de la reconnaissance, par cet identifiant (B), du deuxième code de réveil WUP2.

2. Procédé d'inhibition selon la revendication 1 **caractérisé en ce qu'**il consiste, après déverrouillage du véhicule (V), à commander la transmission vers chaque identifiant (B) préalablement détecté dans le dit véhicule, d'une trame de données spécifique incorporant, en préambule, le premier code de réveil WUP1, et adaptée pour commander une réactivation de la reconnaissance, par cet identifiant (B), du deuxième code de réveil WUP2.

3. Procédé d'inhibition selon l'une des revendications 1 ou 2 **caractérisé en ce que** l'on définit deux codes de réveil différents :
• un premier code de réveil WUP1 de type classique destiné à être transmis en préambule de trames de données relatives aux procédures d'inhibition provisoire et aux autres différentes fonctions des identifiants (B),
• et un deuxième code de réveil WUP2 spécifique à la procédure d'identification des identifiants (B), et incorporant un code d'identification du véhicule (V).

## Claims

1. Method for temporarily inhibiting, when it is detected inside a locked vehicle (V), a portable remote control unit (B), known as a tag, of a hands-free access device, comprising, aside from said tag, a central processing unit (4) on board the vehicle (V) and transmission means (1-3, 5), on the one hand, located inside the vehicle (V) and, on the other hand, integrated into the tag (B), and designed to enable a dialogue to be established between the central processing unit (4) and the tag (B) with a view to implementing authorisation procedures for access to the vehicle (V) comprising an initial identification procedure which consists in causing the central processing unit (4) periodically to transmit a data frame incorporating a preamble consisting of a predefined wake-up code that can be identified by the tag (B), the latter being programmed, having identified this wake-up code, to switch from a standby state to an active state enabling a dialogue to be established with the CPU (4), said inhibition method being **characterised in that** it consists:
• in defining a first wake-up code WUP1 at least intended for the procedure of temporarily inhibiting the tags (B),
• in defining a second wake-up code WUP2 specifically intended for the procedure of identifying the tags (B),
• and in establishing temporary inhibition procedures, which consist, when a tag (B) has been detected inside a locked vehicle (V), in causing the central processing unit (4) to transmit to said tag a specific data frame incorporating, in its preamble, the first wake-up code WUP1 and designed to cause a deactivation of the recognition of the second wake-up code WUP2 by this tag (B).

2. Inhibiting method according to claim 1, **characterised in that** it consists, once the vehicle (V) has been unlocked, in causing a specific data frame incorporating, in its preamble, the first wake-up code WUP1 and designed to cause a reactivation of the recognition of the second wake-up code WUP2 by this tag (B) to be transmitted to each tag (B) previously detected as being inside said vehicle.

3. Inhibiting method according to one of claims 1 or 2, **characterised in that** two different wake-up codes are defined:
• a first wake-up code WUP1 of conventional type intended to be transmitted as a preamble of data frames relating to the temporary inhibition procedures and to the other various functions of the tags (B),
• and a second wake-up code WUP2 specific to the procedure of identifying the tags (B) and incorporating an identification code pertaining to the vehicle (V).

## Patentansprüche

1. Verfahren zur provisorischen Sperrung eines tragbaren Fernbedienungsgeräts (B) eines schlüssellosen Zugangssystems, eines sogenannten Identifikators, bei der Erkennung in einem verriegelten Fahrzeug (V), umfassend, außer dem Identifikator, eine Zentraleinheit (4), die in das Fahrzeug (V) eingebaut ist, und Übertragungsmittel (1-3, 5), die einerseits im Fahrzeug (V) angeordnet und andererseits im Identifikator (B) integriert und angepasst sind, um den Aufbau eines Dialogs zwischen der Zentraleinheit (4) und dem Identifikator (B) im Hinblick auf die Umsetzung von Verfahren für die Genehmigung des Zugriffs auf das Fahrzeug (V) zu ermöglichen, umfassend ein initiales Identifikationsverfahren, das im Steuern der periodischen Aussendung eines Datenframes durch die Zentraleinheit (4) besteht, der eine Präambel beinhaltet, die aus einem vordefinierten Weckcode besteht, der vom Identifikator (B) identifizierbar ist, wobei dieser Letztere programmiert ist, um nach Identifikation dieses Weckcodes von einem Stand-by-Zustand auf einen Aktivzustand umzuschalten, wodurch der Aufbau eines Dialogs mit der Zentraleinheit (4) ermöglicht wird, wobei das Verfahren zur Sperrung **dadurch gekennzeichnet ist, dass** es folgende Schritte umfasst:
• Definieren eines ersten Weckcodes WUP1, der zumindest für das Verfahren zur provisorischen Sperrung der Identifikatoren (B) bestimmt ist,
• Definieren eines zweiten Weckcodes WUP2, der eigens für das Identifikationsverfahren der Identifikatoren (B) bestimmt ist,
• und Aufbauen von Verfahren zur provisorischen Sperrung, die bei der Erkennung eines Identifikators (B) in einem verriegelten Fahrzeug (V) im Steuern der Übertragung eines spezifischen Datenframes durch die Zentraleinheit (4) an den Identifikator bestehen, wobei der Datenframe als Präambel den ersten Weckcode WUP1 beinhaltet und angepasst ist, um eine Deaktivierung der Wiedererkennung des zweiten Weckcodes WUP2 durch diesen Identifikator (B) zu steuern.

2. Verfahren zur Sperrung nach Anspruch 1, **dadurch gekennzeichnet, dass** es nach Entriegelung des Fahrzeugs (V) im Steuern der Übertragung eines spezifischen Datenframes an jeden Identifikator (B), der zuvor im Fahrzeug erkannt wurde, besteht, wobei der Datenframe als Präambel den ersten Weckcode WUP1 beinhaltet und angepasst ist, um eine Reaktivierung der Wiedererkennung des zweiten Weckcodes WUP2 durch diesen Identifikator (B) zu steuern.

3. Verfahren zur Sperrung nach einem der Ansprüche 1 oder 2, **dadurch gekennzeichnet, dass** zwei unterschiedliche Weckcodes definiert werden:
• ein erster Weckcode WUP1 klassischer Art, der dazu bestimmt ist, als Präambel von Datenframes bezogen auf die Verfahren zur provisorischen Sperrung und auf die anderen verschiedenen Funktionen der Identifikatoren (B) übertragen zu werden,
• und ein zweiter Weckcode WUP2, der dem Identifikationsverfahren der Identifikatoren (B) eigen ist und einen Code zur Identifikation des Fahrzeugs (V) beinhaltet.
